# EUROPÄISCHE PATENTSCHRIFT

(11) **EP 1 491 564 B1**
(45) Veröffentlichungstag und Bekanntmachung des Hinweises auf die Patenterteilung: **27.02.2013**
(21) Anmeldenummer: 04013870.3
(22) Anmeldetag: 14.06.2004
(51) Int. Cl.: C08G 18/34, C09D 163/00

(54) **Polyisocyanat-modifizierte Polycarbonsäuren**
Polyisocyanate-modified polycarboxylic acids
Acides polycarboxyliques modifiés par des polyisocyanates

(30) Priorität: 26.06.2003 DE 10328663
(43) Veröffentlichungstag der Anmeldung: 29.12.2004
(73) Patentinhaber: Bayer MaterialScience AG, 51368 Leverkusen (DE)
(72) Erfinder: Laas, Hans Josef, Dr., 51467 Bergisch Gladbach (DE); Gürtler, Christoph, Dr., 50676 Köln (DE); Halpaap, Reinhard, Dr., 51519 Odenthal (DE); Grahl, Michael, 51371 Leverkusen (DE); Thometzek, Peter, Dr., 70329 Stuttgart (DE); Rawlins, James, Dr., 51375 Leverkusen (DE)

(56) Entgegenhaltungen:
- US-A- 3 383 400
- US-A- 3 922 295

## Beschreibung

Die Erfindung ein Verfahren zur Herstellung von Polyisocyanat-modifizierten Polycarbonsäuren durch Umsetzung Anhydridgruppen-freier Polycarbonsäuren mit isocyanatfunktionellen Verbindungen sowie die Verwendung der Produkte als Vernetzerkomponenten für Lackbindemittel oder - bindemittelkomponenten mit gegenüber Carboxylgruppen reaktionsfähigen Gruppen, insbesondere als Vernetzer für Pulverlackbindemittel auf Epoxidharz-Basis.

Pulverlacke auf Basis epoxyfunktioneller Bindemittel, wie z.B. Glycidylmethacrylate (GMA), sind bekannt und Gegenstand einer Vielzahl von Veröffentlichungen (siehe z. B. EP-B 0 509 393, Seite 2, Zeile 6 bis 17). Als geeignete Vernetzer für derartige Pulverlackbindemittel werden beispielsweise Polycarbonsäuren, darunter insbesondere die aliphatischen Dicarbonsäuren, deren Anhydride bzw. Polyanhydride oder auch carboxyfunktionelle Polyester oder Polyacrylate beschrieben. Aus der Vielzahl der vorgeschlagenen möglichen Vernetzerkomponenten kommt in der Praxis heute fast ausschließlich Dodecandisäure bzw. deren Polyanhydrid zur Anwendung. Mit Dodecandisäure gehärtete Pulverbeschichtungen zeichnen sich bei vergleichsweise moderaten Einbrenntemperaturen durch sehr gute optische Eigenschaften, insbesondere einen hervorragenden Verlauf aus, weshalb sie mittlerweile auch als Klarlack in der Automobilerstlackierung eingesetzt werden.

Mit Ausnahme der guten Optik genügen die Eigenschaften von Pulverlacken auf Basis epoxyfunktioneller Bindemittel und Dicarbonsäuren bzw. Dicarbonsäureanhydriden als Vernetzer häufig allerdings nicht den Anforderungen der Praxis an hochwertige Beschichtungen. Insbesondere hohe Beständigkeiten gegenüber chemischer oder mechanischer Belastung, wie sie z. B. von konventionellen, mit Polyisocyanaten gehärteten Polyurethanlacken bekannt sind, lassen sich mit solchen Pulverlacksystemen nicht erreichen. Dies liegt zum einen an der strikten Difunktionalität der eingesetzten Vernetzerkomponenten und der damit verbundenen niedrigen Vernetzungsdichte, zum anderen daran, dass die Vernetzung des Systems ausschließlich über Esterbindungen erfolgt, die im Gegensatz zu beispielsweise Urethanbindungen eine deutlich höhere Empfindlichkeit gegenüber Hydrolyse oder Einwirkung von Chemikalien besitzen.

Es wurden daher auch bereits Versuche unternommen, die Eigenschaften carboxy- bzw. anhydridfunktioneller Vernetzer durch Modifizierung mit Polyisocyanaten zu verbessern.

So beschreibt beispielsweise EP-A 0 695 771 Umsetzungsprodukte von Polyisocyanaten mit Dicarbonsäure(poly)anhydriden, die ggf. im Gemisch mit bis zu 50 Gew.-% an reinen Dicarbonsäuren vorliegen können, als Vernetzerkomponenten für Pulverlackbindemittel auf Epoxidharz-Basis. Zur Einstellung des Molekulargewichtes werden bei der Synthese dieser Vernetzer gegebenenfalls niedermolekulare Amine, Alkohole oder Aminoalkohole zugesetzt. Ein sehr ähnliches Verfahren zur Herstellung Polyisocyanat-modifizierter Polycarbonsäuren aus Dicarbonsäurepolyanhydriden ist Gegenstand der EP-A 0 874 010, wobei dem Reaktionsgemisch jedoch anstelle amino- und/oder hydroxyfunktioneller Molekulargewichtsregler Wasser zugesetzt wird, um durch Hydrolyse zumindest eines Teils der Anhydridstrukturen das Molekulargewicht gezielt einzustellen. Nach beiden Verfahren lassen sich verzweigte Vernetzer erhalten, die in Kombination mit üblichen epoxyfunktionellen Pulverlackbindemitteln hochwertigere Beschichtungen liefern. Die Synthese der als Zwischenstufe benötigten Polyanhydride durch Umsetzung von Dicarbonsäuren mit Acetanhydrid unter gleichzeitigem Abdestillieren von Essigsäure macht die Herstellung dieser Polyisocyanat-modifizierten Dicarbonsäure(poly)anhydride im technischen Maßstab allerdings außerordentlich aufwendig und teuer. Insbesondere aufgrund ihres hohen Preises konnten sich die modifizierten Polycarbonsäuren nach EP-A 0 695 771 und EP-A 0 874 010 trotz ihrer guten Vemetzereigenschaften bis heute im Markt nicht durchsetzen.

Die US-A 5 371 167 beschreibt ebenfalls carboxyfunktionelle Polyisocyanatderivate, hergestellt aus Polyisocyanaten und Verbindungen mit mindestens einer Carboxylgruppe und mindestens einer von Carboxyl verschiedenen gegenüber Isocyanaten reaktiven Gruppe, vorzugsweise Hydroxy- bzw. Aminocarbonsäuren, die in lösemittelhaltigen Lacksystemen als Vernetzer für Polyole, Polyepoxide, Polycarbodiimide oder Melamin-Formaldehyd-Harze eingesetzt werden. Die Herstellung dieser carboxyfunktionellen Polyurethane bzw. Polyharnstoffe gelingt ausschließlich in Lösung unter sehr milden Bedingungen. Für eine Verwendung als Pulverlackvernetzer müßten die Produkte daher in einem zusätzlichen, wiederum teuren Verfahrenschritt vom Lösemittel befreit werden. Eine Herstellung in Schmelze ist aufgrund der vergleichsweise geringen Reaktionsunterschiede zwischen Carboxylgruppen und Hydroxyl- bzw. Aminogruppen gegenüber Isocyanaten nicht möglich.

US-A-3 922 295 offenbart ein Verfahren zur Herstellung Isocyanatgruppen enthaltender oligomerer Polyanhydride, bei dem aromatische Diisocyanate mit α,ω-Alkylendicarbonsäuren umgesetzt werden. Das molare Verhältnis von Dicarbonsäure zu Diisocyanat beträgt zwischen 0,5:1 und 1,1:1. Die erhaltenen Produkte dienen als Vorstufe zur Herstellung von Polyamiden.

US-A-3 383 400 offenbart ein Verfahren zur Herstellung acylierter Harnstoffpolyisocyanate, bei dem aliphatische Polyisocyanate mit aliphatischen Dicarbonsäuren umgesetzt werden, wobei pro mol Dicarbonsäure mindestens 4 mol Polyisocyanat eingesetzt werden. Die Produkte finden als Klebstoffe oder Lackrohstoffe Verwendung.

Aufgabe der vorliegenden Erfindung war es daher, ein neues Verfahren zur Herstellung Polyisocyanat-modifizierter carboxyfunktioneller Verbindungen zur Verfügung zu stellen, mit dem aus gut verfügbaren Rohstoffen leicht, d.h. ohne aufwändige Verfahrensschritte, wie z.B. Destillation, z.B. in der Schmelze gearbeitet werden kann. Die nach diesem verfahren erhaltenen Produkte müssen als Pulverlackvernetzer in Kombination mit handelsüblichen Pulverlackbindemitteln auf Epoxidharzbasis, insbesondere mit glycidylfunktionellen Polyacrylaten, die Herstellung qualitativ hochwertiger Pulverbeschichtungen ermöglichen.

Diese Aufgabe konnte durch die Bereitstellung des nachfolgend beschriebenen Verfahrens gelöst werden. Es wurde gefunden, dass durch Umsetzung von Anhydridgruppen-freien Polycarbonsäuren mit isocyanatfunktionellen Verbindungen feste, als Pulverlackvernetzer geeignete Produkte erhalten werden, die sich durch niedrige Schmelzviskositäten auszeichnen und zu Beschichtungen von hohem Glanz und guten mechanischen und chemischen Beständigkeiten führen.

Gegenstand der vorliegenden Erfindung ist daher die Herstellung von unterhalb 40°C festen und oberhalb 130°C flüssigen, Polyisocyanat-modifizierten Polycarbonsäuren mit
a) einer mittleren Carboxylfunktionalität von mindestens 1,8,
b) einem Gehalt an freien Carboxylgruppen (berechnet als -COOH; Molekulargewicht = 45) von 4,0 bis 80,0 Gew.-% und
c) einem Gehalt an Amidgruppen (berechnet als -CONH-; Molekulargewicht = 43) von 0,4 bis 32,5 Gew-%,
durch Umsetzung von
A) einer Anhydridgruppen-freien Polycarbonsäurekomponente mit
B) einer isocyanatfunktionellen Komponente einer (mittleren) Isocyanat-Funktionalität von mindestenes 1,8
unter Einhaltung eines Äquivalentverhältnisses von Carboxylgruppen zu Isocyanatgruppen von 1,2 : 1 bis 120 : 1.

Gegenstand der Erfindung ist auch die Verwendung der so erhaltenen Polyisocyanat-modifizierten Polycarbonsäuren als Vernetzerkomponenten für Lackbindemittel mit gegenüber Carboxylgruppen reaktiven Gruppen, insbesondere für Gylcidylgruppen-aufweisende Pulverlackbindemittel.

Ausgangskomponenten A) zur Herstellung der erfindungsgemäßen Polyisocyanat-modifizierten Polycarbonsäuren sind beliebige Anhydridgruppen-freie Carbonsäuren aliphatischer, cycloaliphatischer, aromatischer und/oder heteroaromatischer Natur, die gegebenenfalls, z.B. durch Halogenatome, substituiert und/oder ungesättigt sein können. Der Begriff "Anhydridgruppen-frei" schließt dabei nicht aus, dass die eingesetzten Carbonsäuren in geringen Mengen (als unerwünschte Verunreinigung) auch Anhydridgruppen enthalten können. "Anhydridgruppen-frei" bedeutet im Sinne der vorliegenden Erfindung lediglich, dass der Anteil an Carboxylgruppen, die in Form von Anhydridgruppen vorliegen, weniger als 5 mol-%, vorzugsweise weniger als 2 mol-%, besonders bevorzugt weniger als 1 mol-% beträgt. Geeignete Ausgangskomponenten A) sind beispielsweise di- und trifunktionelle Carbonsäuren des Molekulargewichtsbereiches 104 bis 370, wie z.B. Malonsäure, Bernsteinsäure, Glutarsäure, Adipinsäure, Pimelinsäure, Suberinsäure, Azelainsäure, Sebacinsäure, Undecandisäure, Dodecandisäure, Tridecandisäure, Tetradecandisäure, Pentadecandisäure, Hexadecandisäure, Octadecandisäure, Eicosandisäure, die isomeren Cyclohexandicarbonsäuren, Maleinsäure, Phthalsäure, Isophthalsäure, Terephthalsäure, Tetrahydrophthalsäure, Trimellithsäure, die isomeren Pyridindicarbonsäuren oder beliebige Gemische solcher Carbonsäuren. Gegebenenfalls können in der Ausgangskomponente A) neben diesen Di- und Tricarbonsäuren in untergeordneter Menge aber auch Monocarbonsäuren vorliegen. Geeignete Monocarbonsäuren sind beispielsweise solche des Molekulargewichtsbereiches 118 bis 312, wie z. B. Capronsäure, Caprylsäure, Pelargonsäure, Laurinsäure, Myristinsäure, Palmitinsäure, Stearinsäure, Eicosansäure, Ölsäure, Benzoesäure oder deren Gemische. Der Anteil dieser Monocarbonsäuren an der Ausgangskomponente A) beträgt im allgemeinen maximal 10 Gew.-%.

Besonders geeignete Ausgangskomponenten A) sind die gesättigten aliphatischen und/oder cycloaliphatischen Dicarbonsäuren mit 4 bis 20 Kohlenstoffatomen oder deren Gemische. Ganz besonders bevorzugt sind die genannten gesättigten linearen aliphatischen Dicarbonsäuren mit 5 bis 12 Kohlenstoffatomen oder deren Gemische.

Als Ausgangskomponenten B) kommen bei der Herstellung der erfindungsgemäßen Polyisocyanat-modifizierten Polycarbonsäuren beliebige isocyanatfunktionelle Verbindungen zum Einsatz, die eine (mittlere) Funktionalität von mindestens 1,8 aufweisen.

Geeignet sind beispielsweise monomere Di- und Triisocyanate mit aliphatisch, cycloaliphatisch und/oder aromatisch gebundenen Isocyanatgruppen, die nach beliebigen Verfahren, z. B. durch Phosgenierung oder auf phosgenfreiem Weg, beispielsweise durch Urethanspaltung, hergestellt werden können, insbesondere solche des Molekulargewichtsbereiches 140 bis 400, wie z.B. 1,4-Butandiisocyanat, 1,6-Diisocyanatohexan (Hexamethylendiisocyanat, HDI), 1,5-Diisocyanato-2,2-dimethylpentan, 1,10-Diisocyanatodecan, 2,2,4- bzw. 2,4,4-Trimethyl-1,6-diisocyanatohexan, 1,3- und 1,4-Diisocyanatocyclohexan, 1,3- bzw. 1,4-Bisisocyanatomethylcyclohexan, 1-Isocyanato-3,3,5-trimethyl-5-isocyanatomethylcyclohexan (IPDI, Isophorondiisocyanat,), 1-Isocyanato-1-methyl-4(3)-isocyanatomethylcyclohexan, 2,4'- bzw. 4,4'-Diisocyanatodicyclohexylmethan, 1,3-Diisocyanato-2(4)-methylcyclohexan, 4-Isocyanatomethyl-1,8-octandiisocyanat (Triisocyanatononan, TIN), 1,3- bzw. 1,4-Phenylendiisocyanat, 1,3- bzw. 1,4-Bisisocyanatomethylbenzol, Tetrainethylxylylendüsocyanat (TMXDI), 2,4- bzw. 2,6-Toluylendiisocanat (TDI), Diphenylmethan-2,4'- bzw. 4,4'-diisocyanat und Naphthylen-1,5-diisocyanat oder deren Gemische.

Geeignete Ausgangskomponenten B) sind auch durch Modifizierung dieser Di- und/oder Triisocyanate hergestellte Polyisocyanate mit Uretdion-, Isocyanurat-, Iminooxadiazintrion-, Urethan-, Allophanat-, Biuret- und/oder Oxadiazintrionstruktur, wie sie beispielsweise in J. Prakt. Chem. 336 (1994) 185 - 200 oder DE-A 16 70 666, DE-A 1 954 093, DE-A 2 414 413, DE-A 2 452 532, DE-A 2 641 380, DE-A 3 700 209, DE-A 3 900 053, DE-A 3 928 503, EP-A 0 336 205, EP-A 0 339 396 und EP-A 0 798 299 beispielhaft beschrieben sind.

Als Ausgangskomponenten B) ebenfalls geeignet sind NCO-funktionelle Prepolymere mit einer mittleren NCO-Funktionalität von 2,0 bis 4,0 und einem aus Funktionalität und NCO-Gehalt berechenbaren mittleren Molekulargewicht von 350 bis 5000, vorzugsweise von 400 bis 2000, ganz besonders bevorzugt 450 bis 1200, wie sie in bekannter Weise durch Umsetzung der oben genannten Diisocyanate, Triisocyanate und/oder Polyisocyanate mit stöchiometrisch unterschüssigen Mengen von Polyolen, insbesondere solchen des Molekulargewichtsbereiches 62 bis 2000, erhältlich sind. Zur Prepolymerisierung geeignete Polyole sind beispielsweise in der EP-A 1 063 251 von Seite 4, Spalte 5, Zeile 50 bis Seite 5, Spalte 7, Zeile 37 explizit beschrieben. Als Ausgangskomponenten B) besonders bevorzugte Prepolymere sind solche auf Basis der in EP-A 1 063 251 beschriebenen Polyesterpolyole.

Die vorstehend als geeignete Ausgangskomponenten B) zur Herstellung der erfindungsgemäßen Polyisocyanat-modifizierten Polycarbonsäuren genannten monomeren Di- und Triisocyanate, Polyisocyanate und NCO-Prepolymere können selbstverständlich auch in Form beliebiger Gemische untereinander eingesetzt werden.

Zur Einstellung besonderer Eigenschaften, beispielsweise der Funktionalität oder der Schmelzviskosität, können dabei gegebenenfalls auch Monoisocyanate als Bestandteil der isocyanatfunktionellen Komponente B) mitverwendet werden. Geeignete Monoisocyanate sind z. B. Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate.

Bei Mitverwendung von Monoisocyanaten kommen diese allerdings maximal in solchen Mengen zum Einsatz, dass die (mittlere) Isocyanat-Funktionalität der Ausgangskomponente B) mindestens 1,8 beträgt. Bevorzugt weist die isocyanatfunktionelle Komponente B) eine (mittlere) Isocyanat-Funktionalität von 2,0 bis 6,0, besonders bevorzugt von 2,0 bis 4,5 auf.

Bevorzugte Ausgangskomponenten B) sind solche der vorstehend beschriebenen Art mit ausschließlich aliphatisch und/oder cycloaliphatisch gebundenen NCO-Gruppen. Ganz besonders bevorzugt sind HDI, IPDI und 4,4'-Diisocyanatodicyclohexylmethan sowie Polyisocyanate und NCO-Prepolymere auf Basis dieser Diisocyanate.

Zur Herstellung der erfindungsgemäßen Polyisocyanat-modifizierten Polycarbonsäuren werden die Ausgangskomponenten A) und B) im allgemeinen bei Temperaturen oberhalb ihres Schmelzbereiches, vorzugsweise im Temperaturbereich von 90 bis 180 °C, besonders bevorzugt von 100 bis 150°C, unter Einhaltung eines Äquivalent-Verhältnisses von Carboxyl-Gruppen zu NCO-Gruppen von 1,2:1 bis 120:1, vorzugsweise von 2:1 bis 50:1, besonders bevorzugt 4:1 bis 25:1, vorzugsweise bis zum Ende der im allgemeinen spontan einsetzenden CO2-Entwicklung miteinander umgesetzt.

Gegebenenfalls können den Ausgangsverbindungen dabei noch weitere Hilfs- und Zusatzmittel zugesetzt werden.

Zur Beschleunigung der Umsetzung können z. B. die üblichen aus der Polyurethanchemie bekannten Katalysatoren mitverwendet werden, beispielsweise tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethyl-aminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Di-butylzinn(IV)-dimaleat, Dibutylzinn(IV)-dilaurat, Dioctylzinn(IV)-diacetat oder Molybdänglykolat. Bevorzugt eingesetzte Katalysatoren sind die aus der EP-A 1 238 993 bekannten, die Reaktion von Carboxylgruppen mit Isocyanaten beschleunigenden Metallsalze, insbesondere Salze von Elementen der 2. und 3. Hauptgruppe des Periodensystems, wie z. B. Calcium- oder Magnesiumstearat, Calcium- oder Magnesium-perchlorat, Magnesium-trifluormethansulfonat, Aluminiumtriethylat, sowie Lanthanoidensalze, wie z.B. Lanthan-(III)-acetat oder Ytterbium-(III)-tri-fluormethylsulfonat. Geeignete Katalysatoren sind selbstverständlich auch beliebige Gemische der vorstehend beispielhaft genannten Verbindungen.

Diese Katalysatoren kommen bei der Herstellung der erfindungsgemäßen Polyisocyanat-modifizierten Polycarbonsäuren, gegebenenfalls in einer Menge von 0,001 bis 2 Gew.-%, vorzugsweise 0,005 bis 0,5 Gew.-%, bezogen auf das Gesamtgewicht der Ausgangsverbindungen A) und B) zum Einsatz.

Weitere Hilfs- und Zusatzmittel, die den Ausgangsverbindungen beim erfindungsgemäßen Verfahren gegebenenfalls zugesetzt werden können, sind beispielsweise die aus der Pulverlacktechnologie bekannten Verlaufsmittel, wie z.B. Polybutylacrylat oder solche auf Basis von Polysilikonen, Lichtschutzmittel, wie z.B. sterisch gehinderte Amine, UV-Absorber, wie z.B. Benztriazole oder Benzophenone sowie Farbstabilisatoren gegen die Gefahr der Überbrennvergilbung, wie z.B. gegebenenfalls inerte Substituenten aufweisende, Trialkyl-, Triaryl- und/oder Trisalkylphenylphosphite.

Das erfindungsgemäße Verfahren wird im allgemeinen lösemittelfrei in der Schmelze durchgeführt. Selbstverständlich kann die Umsetzung gegebenenfalls aber auch in einem geeigneten, gegenüber Isocyanatgruppen inerten Lösemittel erfolgen. Geeignete Lösemittel für diese weniger bevorzugte Vorgehensweise sind beispielsweise die an sich bekannten üblichen Lacklösemittel wie z.B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, oder deren Gemische, aber auch Lösemittel wie Aceton, Propylenglykoldiacetat, Diethylenglykoldimethylether, Diethylenglykolethyl- und -butyletheracetat, N-Methylpyrrolidon, N-Methylcaprolactam, N,N-Dimethylformamid, N,N-Dimethylacetamid und Methylenchlorid oder Gemische solcher Lösungsmittel.

Diese gegebenenfalls mitverwendeten Lösemittel werden nach erfolgter Umsetzung mit Hilfe geeigneter Methoden, beispielsweise durch Ausfällen und einfaches Absaugen, Sprühtrocknung oder Schmelzextrusion in einer Ausdampfschnecke, vom erfmdungsgemäßen Verfahrensprodukt abgetrennt.

Unabhängig von der Art der Durchführung erhält man beim erfindungsgemäßen Verfahren in einfacher Weise in Abhängigkeit vom gewählten Äquivalentverhältnis von Carboxylgruppen zu Isocyanatgruppen Polyisocyanat-modifizierte Polycarbonsäuren mit einer mittleren Carboxylfunktionalität von mindestens 1,8, vorzugsweise von 2,0 bis 6,0, besonders bevorzugt 2,0 bis 5,0, einem Gehalt an freien Carboxylgruppen (berechnet als -COOH; Molekulargewicht = 45) von 4,0 bis 80,0 Gew.-%, vorzugsweise von 6,0 bis 70,0 Gew.-%, besonders bevorzugt von 8,0 bis 60,0 Gew.-%, und einem Gehalt an Amidgruppen (berechnet als -CONH-; Molekulargewicht = 43) von 0,4 bis 32,5 Gew.-%, vorzugsweise von 0,6 bis 24,0 Gew.-%, besonders bevorzugt von 1,2 bis 15,5 Gew.-%, die unterhalb 40°C fest und oberhalb 150°C flüssig sind und insbesondere einen nach der Differential-Thermoanalyse (DTA) bestimmten Schmelzpunkt bzw. Schmelzbereich aufweisen, der innerhalb eines Temperaturbereiches von 40 bis 130°C, besonders bevorzugt innerhalb des Temperaturbereiches von 50 bis 125°C liegt.

Die erfindungsgemäßen Polyisocyanat-modifizierten Polycarbonsäuren eignen sich hervorragend als Vernetzerkomponenten für Lackbindemittel, insbesondere für Pulverlackbindemittel mit gegenüber Carboxylgruppen reaktiven Gruppen.

Hierbei handelt es sich beispielsweise um die bekannten epoxyfunktionellen Pulverlackbindemittel, vorzugsweise um epoxidgruppenhaltige Polyacrylatharze, die nach literaturbekannten Methoden durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, hergestellt werden können. Geeignete epoxidgruppenhaltige Polyacrylatharze sind beispielsweise in EP-A 0 299 420, DE-A 2 214 650, DE-A 2 749 576, US-A 4 091 048 und US-A 3 781 379 beschrieben.

Die zur Herstellung der epoxyfunktionellen Pulverlackbindemittel eingesetzten epoxyfunktionellen Monomere sind insbesondere Glycidylacrylat, Glycidylmethacrylat und Allylglycidylether. Als Beispiele für ethylenisch ungesättigte Monomere, die keine Epoxidgruppe im Molekül enthalten, seien beispielhaft genannt: Alkylester der Acryl- und Methacrylsäure mit bis zu 18, vorzugsweise bis zu 8 Kohlenstoffatomen im Alkylrest, wie z. B. Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, tert.-Butylacrylat, tert.-Butylmethacrylat, 2-Ethylhexylacrylat, 2-Ethylhexylmethacrylat, Neopentylacrylat, Neopentylmethacrylat, Stearylmethacrylat, die Cyclohexyl-, Isobornyl-, 3,3,5-Trimethylcyclohexyl-, Phenyl-, Benzyl- oder 2-Phenylester von Acrylsäure und Methacrylsäure, aber auch Maleinsäure- bzw. Fumarsäuredialkylester oder -cycloalkylester mit bis zu 8 Kohlenstoffatomen in den Alkylresten, wie z.B. Maleinsäuredimethylester, Maleinsäurediethylester, Maleinsäurediisopropylester, Maleinsäurediisobutylester, Maleinsäuredi-tert.-butylester, Maleinsäuredicyclohexylester und die entsprechenden Fumarsäuredialkylester.

Weitere Beispiele für ethylenisch ungesättigte Monomere, die keine Epoxidgruppen im Molekül enthalten, sind Säureamide, wie z.B. Acrylsäure- und Methacrylsäureamid, vinylaromatische Verbindungen, wie z.B. Styrol, Methylstyrol und Vinyltoluol, Nitrile, wie z.B. Acrylnitril und Methacrylnitril, Vinyl- und Vinylidenhalogenide, wie z.B. Vinylchlorid und Vinylidenfluorid, Vinylester, wie z.B. Vinylacetat, sowie Hydroxyalkylester der Acryl- oder Methacrylsäure mit 2 bis 8, vorzugsweise 2 bis 4 Kohlenstoffatomen im Hydroxyalkylrest, wie z.B. Hydroxyethylacrylat, Hydroxyethylmethacrylat, Hydroxypropylacrylat, Hydroxypropylmethacrylat, insbesondere die Anlagerungsprodukte von Propylenoxid an Acryl- bzw Methacrylsäure, und 2- oder 4-Hydroxybutylacrylat oder -methacrylat.

Die als Reaktionspartner für die erfindungsgemäßen Polyisocyanat-modifizierten Polycarbonsäuren bevorzugt eingesetzten epoxyfunktionellen Polyacrylatharze weisen üblicherweise eine durch Differential Scanning Calorimetrie (DSC) bestimmte Glasübergangstemperatur (Tg) im Bereich von 20 bis 100°C, vorzugsweise von 30 bis 90°C, und ein gelpermeationschromatographisch unter Verwendung von Polystyrol als Standard bestimmtes mittleres Molekulargewicht (Mw) von 1500 bis 30000, vorzugsweise 2000 bis 20000 auf. Das Epoxyäquivalentgewicht beträgt 365 bis 2840, vorzugsweise 430 bis 1420.

Als epoxyfunktionelle Pulverlackbindemittel prinzipiell ebenfalls geeignet sind epoxyfunktionelle Polykondensationsharze, wie z.B. die bekannten Umsetzungsprodukte von Epichlorhydrin mit mehrwertigen Phenolen sowie Novolaken auf Phenolbasis.

Gegebenenfalls werden bei der Herstellung von Pulverlacken aus den erfmdungsgemäßen Polyisocyanat-modifizierten Polycarbonsäuren weitere Hilfs- und Zusatzmittel, wie z. B. Aushärtekatalysatoren, Pigmente, Füllstoffe oder Verlaufsmittel mitverwendet.

Bei den gegebenenfalls zur Beschleunigung der Aushärtung mitzuverwendenden Katalysatoren handelt es sich in der Regel um die üblichen literaturbekannten Verbindungen, die geeignet sind, die Reaktion zwischen Carboxyl- und Epoxidgruppen zu beschleunigen, beispielsweise um Tetraalkylammoniumsalze, wie z.B. Tetrabutylammoniumchlorid, -bromid oder -iodid, Tetraethylammoniumchlorid, -bromid oder -iodid, Trimethylbenzylammoniumchlorid, Dodecyldimethyl-(2-phenoxyethyl)-ammoniumbromid oder Diethyl-(2-hydroxyethyl)-methylammoniumbromid, um Katalysatoren mit Imidazolstruktur, wie z.B. Imidazol, 2-Methylimidazol, 2-Methyl-4-ethylimidazol, 2-[(N-Benzylanilino)-methyl]-2-imidazolinphosphat oder 2-Benzyl-2-imidazolinhydrochlorid, um tert. Amine, wie z.B. N,N-Dimethylcyclohexylamin, N,N-Diethylcyclohexylamin, N-Methylpiperidin, N-Methylmorpholin, Pentamethyldiethylentriamin, N,N-Dimethylpiperazin oder 1,4-Diazabicyclo[2,2,2]octan, oder um die bereits oben genannten, gegebenenfalls bei der Herstellung der erfindungsgemäßen Polyisocyanat-modifizierten Polycarbonsäuren mitzuverwendenden aus der Polyurethanchemie bekannten Katalysatoren sowie um beliebige Gemische solcher Katalysatoren.

Diese Katalysatoren können gegebenenfalls in Mengen von 0,01 bis 5,0 Gew.-% vorzugsweise 0,05 bis 2,0 Gew.-%, bezogen auf die Gesamtmenge an organischem Bindemittel, d.h. Polyisocyanat-modifizierten Polycarbonsäuren in Kombination mit den epoxyfunktionellen Pulverlackbindemitteln aber exklusive den gegebenenfalls verwendeten weiteren Hilfs- und Zusatzmitteln, zugesetzt werden.

Weitere Hilfs- und Zusatzmittel, die bei der Herstellung der Pulverlacke gegebenenfalls zugesetzt werden können, sind beispielsweise die üblichen Pigmente und Füllstoffe, die aus der Pulverlacktechnologie bekannten Verlaufsmittel, Lichtschutzmittel, UV-Absorber oder Farbstabilisatoren, die bereits oben als gegebenenfalls bei der Herstellung der erfindungsgemäßen Polyisocyanat-modifizierten Polycarbonsäuren mitzuverwendende Hilfs- und Zusatzmittel beschrieben wurden.

Zur Herstellung eines gebrauchsfertigen Pulverlacks werden die erfindungsgemäßen Polyisocyanat-modifizierten Polycarbonsäuren mit den vorstehend beschriebenen Pulverlackbindemitteln mit gegenüber Carboxylgruppen reaktiven Gruppen und gegebenenfalls weiteren Hilfs- und Zusatzmitteln versetzt, und beispielsweise in Extrudern oder Knetern in der Regel bei Temperaturen oberhalb des Schmelzbereichs der Einzelkomponenten, beispielsweise bei Temperaturen von 70 bis 130°C, vorzugsweise von 70 bis 110°C, zu einem homogenen Material vereinigt. Dabei werden die erfindungsgemäßen Polyisocyanat-modifizierten Polycarbonsäuren und die gegenüber Carboxylgruppen reaktive Gruppen aufweisenden Bindemitteln in solchen Mengen miteinander kombiniert, die einem Äquivalentverhältnis von Carboxylgruppen zu gegenüber Carboxylgruppen reaktionsfähigen Gruppen, insbesondere Epoxidgruppen, von 1,5 : 1 bis 0,7 : 1, vorzugsweise von 1,3 : 1 bis 0,8 : 1, besonders bevorzugt 1,1 : 1 bis 0,9 : 1 entsprechen.

Die Herstellung der Pulverlacke erfolgt vorzugsweise, wie vorstehend beschrieben, in einem lösemittelfreien Prozess in Schmelze. Selbstverständlich ist es jedoch auch möglich, sämtliche Einzelkomponenten des Pulverlacksystems in geeigneten Lösungsmitteln oder Lösungsmittelgemischen gelöster Form miteinander zu mischen.

Geeignete Lösungsmittel für diese weniger bevorzugte Vorgehensweise sind beispielsweise die bereits oben genannten, gegebenenfalls bei der Herstellung der erfindungsgemäßen Polyisocyanat-modifizierten Polycarbonsäuren mitzuverwendenden üblichen Lacklösungsmittel.

Diese gegebenenfalls mitverwendeten Lösungsmittel werden nach erfolgter Homogenisierung der Einzelkomponenten mit Hilfe geeigneter Methoden, beispielsweise durch Ausfällen und einfaches Absaugen, Sprühtrocknung oder Schmelzextrusion in einer Ausdampfschnecke, vom erfindungsgemäßen Pulverlack abgetrennt.

Unabhängig von dem für die Pulverlackherstellung gewählten Verfahren wird der nach Abkühlen der Extrusionsschmelze oder Entfernung der mitverwendeten Lösungsmittel resultierende Feststoff anschließend gemahlen und durch Sieben von den Kornanteilen oberhalb der gewünschten Korngröße, beispielsweise oberhalb 0,1 mm, befreit.

Der so hergestellte sprühfertige Pulverlack kann nach üblichen Pulverauftragsverfahren, wie z. B. elektrostatischem Pulverversprühen oder Wirbelsintern, auf die zu überziehenden Substrate aufgebracht werden. Erfmdungsgemäß können beliebige hitzeresistente Substrate, wie beispielsweise solche aus Metallen, Kunststoffen, Holz oder Glas, beschichtet werden. Vorzugsweise dienen die erfmdungsgemäß hergestellten Pulverlackformulierungen zur Herstellung von Beschichtungen für Automobilanwendungen, insbesondere zur Herstellung von Automobilklarlacken.

Die Härtung der Überzüge erfolgt durch Erhitzen auf Temperaturen von 110 bis 220°C, vorzugsweise 130 bis 180°C, beispielsweise während eines Zeitraumes von 10 bis 60 Minuten, vorzugsweise 10 bis 30 Minuten. Man erhält harte und elastische Beschichtungen mit guter Lösemittel- und Chemikalienbeständigkeit, die einen hervorragenden Verlauf aufweisen. Wie die nachfolgenden Beispiele zeigen, führt die Verwendung der erfindungsgemäßen Polyisocyanat-modifizierten Polycarbonsäuren als Vernetzer in Pulverlacken auf Basis glycidylfunktioneller Pulverlackbindemittel zu Beschichtungen, die gegenüber solchen, die mit den bisher beaknnten Polyisocyanat-modifizierten Vernetzern des Standes der Technik ausgehärtet wurden, mindestens gleich gute chemische und mechanische Beständigkeiten aufweisen, sich darüberhinaus aber durch einen deutlich höheren Glanz auszeichnen.

### Beispiele

Die folgenden Beispiele dienen zur weiteren Erläuterung der Erfindung. Alle Prozentangaben sind, soweit nichts Anderslautendes vermerkt, Gewichtsprozent.

### Isocyanatfunktionelle Ausgangskomponenten A)

A1) Polyester-modifiziertes, Isocyanuratgruppen enthaltendes Polyisocyanat auf Basis von HDI, hergestellt analog Beispiel 5 der EP-A 336 205.

| | |
|---|---|
| NCO-Gehalt: | 11,0 % |
| monom. HDI: | 0,1 % |
| Funktionalität: | 3,9 |
| Viskosität (nach DIN 53 018): | 6100 mPas (23°C) |

A2) Monomerarmes isocyanatfunktionelles Prepolymer, hergestellt durch Umsetzung einer Mischung (ca. 13 : 87) von 2,4'- und 4,4'-Diisocyanatodicyclohexylmethan (10 mol) mit 1,10-Decandiol (1 mol) bei 100°C und anschließendes Entfernen des nicht umgesetzten monomeren Diisocyanates durch Dünnschichtdestillation (180°C / 0,3 mbar).

| | |
|---|---|
| NCO-Gehalt: | 10,6 % |
| monom. Diisocyanatodicyclohexylmethan: | 0,3 % |
| Funktionalität: | 2,0 |
| Schmelzpunkt: | 82-91°C |

A3) Isocyanuratgruppen enthaltendes Polyisocyanat auf Basis von HDI, hergestellt analog Beispiel 7 der EP-A 0 330 966.

| | |
|---|---|
| NCO-Gehalt: | 23,0 % |
| monom. HDI: | 0,1 % |
| Funktionalität: | 3,2 |
| Viskosität (nach DIN 53 018): | 1200 mPas (23°C) |

A4) 2,4'- und 4,4'-Diisocyanatodicyclohexylmethan, monomer (ca. 13 : 87)

| | |
|---|---|
| NCO-Gehalt: | 32,0 % |
| Funktionalität: | 2,0 |

A5) Lösemittelfreies Isocyanurat- und Uretdiongruppen enthaltendes Polyisocyanat auf Basis von HDI und IPDI, hergestellt analog EP-A 693 512 (Polyisocyanatkomponente 1).

| | |
|---|---|
| NCO-Gehalt: | 20,2 % |
| monom. HDI: | 0,1 % |
| monom. IPDI: | 0,2 % |
| Funktionalität: | 2,7 |
| Viskosität (nach DIN 53 018): | 2900 mPas (23°C) |

A6) Monomerhaltiges isocyanatfunktionelles Prepolymer, hergestellt bei 100°C durch Umsetzung einer Mischung (ca. 13 : 87) von 2,4'- und 4,4'-Diisocyanato-dicyclohexylmethan (10 mol) mit einem auf 1,4-Butandiol gestarteten ε-Caprolacton-Polyesterdiol des Molekulargewichtes 250 (3 mol).

| | |
|---|---|
| NCO-Gehalt: | 17,4 % |
| Funktionalität: | 2,0 |
| Schmelzbereich: | 35-40°C |

### Beispiel 1

800 g (10,96 val) Adipinsäure wurden in einem Planschliffgefäß unter trockenem Stickstoff vorgelegt und bei einer Temperatur von 155°C aufgeschmolzen. Unter Rühren wurden nun 200 g (0,52 val) der isocyanatfunktionelle Komponente A1), entsprechend einem Äquivalentverhältnis von Carboxylgruppen zu Isocyanatgruppen von 21,1 : 1, über einen Zeitraum von 30 min zugegeben, wobei unmittelbar nach Beginn der Polyisocyanatzugabe die Bildung von CO2 einsetzte. Nach Ende der Gasentwicklung wurde das Reaktionsgemisch weitere 5 min intensiv gerührt und anschließend zum Erkalten auf ein Blech gegossen. Nach Abkühlen auf Raumtemperatur erhielt man eine erfindungsgemäße Polyisocyanat-modifizierte Polycarbonsäure mit folgenden Kenndaten:

| | |
|---|---|
| Carboxylgruppen-Gehalt: | 50,6 % |
| Äquivalentgewicht: | 89 g/val COOH |
| Carboxylfunktionaltät (ber.): | 2,04 |
| Amidgruppen-Gehalt (ber.): | 2,3 % |
| Schmelzpunkt: | 120-123°C |

### Beispiele 2 bis 8

Nach dem vorstehend beschriebenen Verfahren wurden unter Verwendung unterschiedlicher Dicarbonsäuren und den isocyanatfunktionellen Aufbaukomponenten A1) - A5) Polyisocyanat-modifizierte Polycarbonsäuren hergestellt. Die nachfolgende Tabelle zeigt die Zusammensetzungen und Kenndaten der erfmdungsgemäßen Produkte.

| Beispiel | | 2 | 3 | 4 | 5 | 6 | 7 | 8 |
|---|---|---|---|---|---|---|---|---|
| Dodecandisäure | [Gew.-Teile] | 85 | - | - | - | - | - | - |
| Azelainsäure | [Gew.-Teile] | - | - | 64 | 64 | 64 | 64 | 42 |
| Sebacinsäure | [Gew.-Teile] | - | 80 | 16 | 16 | 16 | 16 | 28 |
| Isocyanat A1) | [Gew.-Teile] | - | - | 20 | - | - | - | - |
| Isocyanat A2) | [Gew.-Teile] | 15 | - | - | - | - | - | - |
| Isocyanat A3) | [Gew.-Teile] | - | 20 | - | - | - | - | - |
| Isocyanat A4) | [Gew.-Teile] | - | - | - | 20 | - | - | - |
| Isocyanat A5) | [Gew.-Teile] | - | - | - | - | 20 | - | 30 |
| Isocyanat A6) | [Gew.-Teile] | - | - | - | - | - | 20 | - |
| Äquivalentverhältnis: | [COOH : NCO] | 19,4 | 7,2 | 16,0 | 5,5 | 8,7 | 10,1 | 5,0 |
| Carboxylgruppen-Gehalt: | [Gew.-%] | 32,6 | 33,3 | 36,0 | 28,7 | 35,4 | 36,6 | 28,5 |
| Äqivalentgewicht: | [g/val COOH] | 138 | 135 | 125 | 157 | 127 | 123 | 158 |
| Carboxylfunktionalität: | | 2,00 | 2,19 | 2,07 | 2,00 | 2,07 | 2,00 | 2,14 |
| Amidgruppen-Gehalt: | [Gew.-%] | 1,7 | 6,3 | 2,3 | 7,0 | 4,3 | 3,7 | 6,6 |
| Schmelzpunkt | [°C] | 124-126 | 122-129 | 82-88 | 85-90 | 81-87 | 78-82 | 77-90 |

### Beispiel 9

### (Vergleich, Polyisocyanat-modifiziertes Polyanhydrid gemäß EP-B 0 695 771)

1000 g Dodecandisäure wurden 2 Stunden unter trockenem Stickstoff zusammen mit 260 g Acetanhydrid erhitzt. Anschließend wurde bei 130°C die entstandene Essigsäure im Wasserstrahlvakuum abdestilliert. Zu der nun vorliegenden Schmelze von Dodecandisäurepolyanhydrid wurden innerhalb von 45 min 200 g (1,09 val) des Polyisocyanates A3) gegeben und weiter gerührt, bis nach ca. 2 Stunden Ir-spektroskopisch keine freien Isocyanatgruppen mehr nachweisbar waren. Die Schmelze wurde zum Erkalten auf ein Blech gegossen und man erhielt ein Polyisocyanat-modifiziertes Polyanhydrid mit folgenden Kenndaten:

| | |
|---|---|
| Carboxylgruppen-Gehalt: | 10,2 % |
| Carbonsäureanhydrid-Gehalt: | 16,6 % |
| Äquivalentgewicht: | 128 g/val COOH |
| Amidgruppen-Gehalt: | 4,2 % |
| Schmelzpunkt: | 87-101 °C |

### Beispiel 10

### (Vergleich, Polyisocyanat-modifizierte Polycarbonsäure gemäß EP-A 0 874 010)

1000 g Dodecandisäure wurden 2 Stunden unter trockenem Stickstoff zusammen mit 260 g Acetanhydrid erhitzt. Anschließend wurde bei 130°C die entstandene Essigsäure im Wasserstrahlvakuum abdestilliert. Zu der nun vorliegenden Schmelze von Dodecandisäurepolyanhydrid wurden innerhalb von 45 min 368 g (2,02 val) des Polyisocyanates A3) gegeben und weiter gerührt, bis nach ca. 2 Stunden Ir-spektroskopisch keine freien Isocyanatgruppen mehr nachweisbar waren. Nun wurden innerhalb von 15 Minuten 21 g Wasser und nach weiteren 2 Stunden nochmal 158 g des Polyisocynates A3) zugetropft. Nach Beendigung der Gasentwicklung wurden die Reaktionsschmelze weitere 30 min gerührt und anschließend zum Erkalten auf ein Blech gegossen. Man erhielt eine Polyisocyanat-modifizierte Polycarbonsäure mit folgenden Kenndaten:

| | |
|---|---|
| Carboxylgruppen-Gehalt: | 10,0 % |
| Carbonsäureanhydrid-Gehalt: | 7,2 % |
| Äquivalentgewicht: | 232 g/val COOH |
| Amidgruppen-Gehalt: | 9,0 % |
| Schmelzpunkt: | 89-95°C |

### Beispiel 11 (Verwendung)

84,7 Gew.-Teile eines handelsüblichen glycidylgruppenhaltigen Polyacrylates (Almatex® PD 7610, Anderson Development Company, Adrian, MI) mit einem Epoxid-Gehalt von 7,8 Gew.-% (Äquivalentgewicht 551 g/val Epoxid) wurden mit 13,7 Gew.-Teilen der Polyisocyanat-modifizierten Polycarbonsäure aus Beispiel 1, entsprechend einem Äquivalentverhältnis von Carboxylzu Glycidylgruppen von 1:1, 1,0 Gew.-Teilen eines handelsüblichen Verlaufsmittels (Worlee® Add 101, Worlée-Chemie GmbH, Hamburg), 0,3 Gew.-Teilen Zinn(II)-palmitat als Katalysator und 0,3 Gew.-Teilen Benzoin gründlich gemischt und anschließend mit Hilfe eines Doppelwellenextruders der Fa. APV Baker Inc. (Grand Rapids, MI) vom Typ MP 19 PC bei 300 U/min und einer Gehäusetemperatur von 100 bis 110°C im Verfahrensteil homogenisiert. Nach Abkühlen wurde die erstarrte Schmelze mit Hilfe einer Sichtermühle ICM 4 (Neumann & Esser Deutschland GmbH & Co. KG, Übach-Palenberg) mit einem 90 µm Sieb gemahlen und gesiebt.

Der so erhaltene Pulverlack wurde mit einer ESB-Becherpistole bei einer Hochspannung von 70 KV auf ein entfettetes, grau vorbeschichtetes Stahlblech gespritzt und 30 min bei einer Temperatur von 145°C ausgehärtet. Bei einer Schichtdicke von etwa 70 µm wurden folgende lacktechnischen Eigenschaften gefunden:

| | | |
|---|---|---|
| Gelierzeit / 160°C | [s] | 131 |
| Verlauf (visuell) a) | | + |
| Pendelhärte b) | [s] | 175 |
| Glanz c) | 20° | 84,0 |
| | 60° | 92,1 |
| | 85° | 104,3 |
| Vergilbung d) Δb | | 0,29 |
| Acetontest e) | DH | 50 |
| | Urteil | 0 |

| | | |
|---|---|---|
| a) Beurteilung: ++ sehr gut, + gut, 0 mäßig, - schlecht b) Pendelhärte nach König (DIN 53157) c) Glanz = Glanz nach Gardner; 20 °, 60 ° bzw. 85 ° Reflexionswinkel d) b-Wert des Untergrundes: -4,27 e) DH = Anzahl der Doppelhübe mit getränktem Wattebausch Urteil: 0 = Film intakt 1 = Filmoberfläche angeweicht 2 = Film bis zum Untergrund angequollen 3 = Film aufgelöst m = matt (Glanzverlust) | | |

### Beispiel 12 bis 20 (erfindungsgemäß und Vergleich)

Nach dem in Beispiel 11 beschriebenen Verfahren wurden ausgehend vom dem in Beispiel 11 beschriebenen glycidylgruppenhaltigen Polyacrylat Almatex® PD 7610 und den Polyisocyanat-modifizierten Polycarbonsäuren aus Beispiel 2 bis 8 Pulverklarlacke hergestellt. Zum Vergleich wurden auf analoge Weise Pulverlacke hergestellt, die die Polyisocyanat-modifizierten Vernetzer der Vergleichs-Beispiele 9 und 10 enthielten.

Die fertig formulierten Pulverlacke wurden jeweils mit einer ESB-Becherpistole bei einer Hochspannung von 70 KV auf entfettete, grau vorbeschichtete Stahlbleche gespritzt und 30 min bei 145°C ausgehärtet. Die nachfolgende Tabelle zeigt die Zusammensetzungen (Gew.-Teile) der Pulverlacke sowie lacktechnische Daten der daraus erhaltenen Beschichtungen (Beurteilung wie in Beispiel 11).

Sämtliche Beschichtungen waren im Acetontest ohne Befund (Beurteilung 0, bei 50 Doppelhüben), d. h. lösemittelbeständig. Die übrigen, der nachfolgenden Tabelle zu entnehmenden lacktechnischen Eigenschaften belegen, dass die Beschichtungen, die die erfindungsgemäßen Polyisocyanat-modifizierten Polycarbonsäuren enthalten, gegenüber denen, die mit den bekannten Polyisocyanat-modifizierten Vemetzem des Standes der Technik ausgehärtet wurden, bei ansonsten vergleichbaren Eigenschaften einen höheren Glanz aufweisen.

| Beispiel | | 12 | 13 | 14 | 15 | 16 | 17 | 18 | 19 (Vergleich) | 20 (Vergleich) |
|---|---|---|---|---|---|---|---|---|---|---|
| Almatex® PD 7610 | | 78,7 | 79,0 | 80,2 | 76,6 | 80,0 | 80,4 | 76,5 | 79,9 | 69,2 |
| Vernetzer aus Beispiel | 2 | 19,7 | - | - | - | - | - | - | - | - |
| Vernetzer aus Beispiel | 3 | - | 19,4 | - | - | - | - | - | - | - |
| Vernetzer aus Beispiel | 4 | - | - | 18,2 | - | - | - | - | - | - |
| Vernetzer aus Beispiel | 5 | - | - | - | 21,8 | - | - | - | - | - |
| Vernetzer aus Beispiel | 6 | - | - | - | - | 18,4 | - | - | - | - |
| Vernetzer aus Beispiel | 7 | - | - | - | - | - | 18,0 | - | - | - |
| Vernetzer aus Beispiel | 8 | - | - | - | - | - | - | 21,9 | - | - |
| Vernetzer aus Vgl.-Beispiel | 9 | - | - | - | - | - | - | - | 18,5 | - |
| Vernetzer aus Vgl.-Beispiel | 10 | - | - | - | - | - | - | - | - | 29,2 |
| Worlée® Add 101 | | 1,0 | 1,0 | 1,0 | 1,0 | 1,0 | 1,0 | 1,0 | 1,0 | 1,0 |
| Benzoin | | 0,3 | 0,3 | 0,3 | 0,3 | 0,3 | 0,3 | 0,3 | 0,3 | 0,3 |
| Zinn(II)-palmitat | | 0,3 | 0,3 | 0,3 | 0,3 | 0,3 | 0,3 | 0,3 | 0,3 | 0,3 |
| Gelierzeit 160°C [s] | | 110 | 99 | 113 | 111 | 135 | 105 | 122 | 88 | 95 |
| Schichtdicke [µm] | | 67-71 | 55 - 63 | 43 - 46 | 55 - 58 | 42 - 48 | 60 - 65 | 50 - 67 | 55-62 | 45-57 |
| Pendelhärte b) [s] | | 173 | 169 | 164 | 175 | 169 | 168 | 165 | 168 | 170 |
| Verlauf (visuell) a) | | + | ++ | ++ | ++ | ++ | ++ | ++ | ++ | + |
| Glanz c) | 20 ° | 84,3 | 83,0 | 85,3 | 82,3 | 84,3 | 85,2 | 80,0 | 73,8 | 79,7 |
| | 60 ° | 92,3 | 92,3 | 92,5 | 91,1 | 92,5 | 91,9 | 88,0 | 88,1 | 90,2 |
| | 85 ° | 103,8 | 105,2 | 106,1 | 104,9 | 103,4 | 106,4 | 104,7 | 103,9 | 102,9 |
| Vergilbung d) Δb | | 0,31 | 0,29 | 0,31 | 0,37 | 0,30 | 0,35 | 0,31 | 0,29 | 0,30 |

## Patentansprüche

1. Verfahren zur Herstellung von unterhalb 40°C festen und oberhalb 130°C flüssigen, Polyisocyanat-modifizierten Polycarbonsäuren mit
a) einer mittleren Carboxylfunktionalität von mindestens 1,8,
b) einem Gehalt an freien Carboxylgruppen (berechnet als -COOH; Molekulargewicht = 45) von 4,0 bis 80,0 Gew.-% und
c) einem Gehalt an Amidgruppen (berechnet als -CONH-; Molekulargewicht = 43) von 0,4 bis 32,5 Gew-%,
durch Umsetzung von
A) einer Anhydridgruppen-freien Polycarbonsäurekomponente mit
B) einer isocyanatfunktionellen Komponente einer (mittleren) Isocyanat-Funktionalität von mindestenes 1,8
unter Einhaltung eines Äquivalentverhältnisses von Carboxylgruppen zu Isocyanatgruppen von 1,2 : 1 bis 120: 1.

2. Verfahren nach Anspruch 1, **dadurch gekennzeichnet, dass** als Polycarbonsäurekomponente A) gesättigte aliphatische und/oder cycloaliphatische Dicarbonsäuren mit 4 bis 20 Kohlenstoffatomen oder deren Gemische eingesetzt werden.

3. Verfahren nach Anspruch 1, **dadurch gekennzeichnet, dass** als Polycarbonsäurekomponente A) gesättigte lineare aliphatische Dicarbonsäuren mit 5 bis 12 Kohlenstoffatomen oder deren Gemische eingesetzt werden.

4. Verfahren nach Anspruch 1, **dadurch gekennzeichnet, dass** als isocyanatfunktionelle Komponente B) solche mit ausschließlich aliphatisch und/oder cycloaliphatisch gebundenen Isocyanatgruppen eingesetzt werden.

5. Verfahren nach Anspruch 1, **dadurch gekennzeichnet, dass** als isocyanatfunktionelle Komponente B) die monomeren Diisocyanate 1,6-Hexamethylendiisocyanat, 1-Isocyanato-3,3,5-trimethyl-5-isocyanatomethylcyclohexan oder 4,4'-Diisocyanatodicyclohexylmethan, Polyisocyanate oder NCO-Prepolymere auf Basis dieser Diisocyanate oder beliebige Gemische dieser Komponenten eingesetzt werden.

6. Verfahren nach Anspruch 1, **dadurch gekennzeichnet, dass** es lösungsmittelfrei in der Schmelze durchgeführt wird.

7. Verfahren nach Anspruch 1, **dadurch gekennzeichnet, dass** in Lösungsmitteln oder Lösungsmittelgemischen durchgeführt wird.

8. Verfahren nach Anspruch 7, **dadurch gekennzeichnet, dass** als Lösungsmittel Vertreter einer Gruppe bestehend aus Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, Aceton, Propylenglykoldiacetat, Diethylenglykoldimethylether, Diethylenglykolethyl- und -butyletheracetat, N-Methylpyrrolidon, N-Methylcaprolactam, N,N-Dimethylformamid, N,N-Dimethylacetamid, Methylenchlorid alleine oder als Gemisch eingesetzt werden.

## Claims

1. Process for preparing polyisocyanate-modified polycarboxylic acids which are solid at below 40°C and liquid at above 130°C and have
a) an average carboxyl functionality of at least 1.8,
b) a content of free carboxyl groups (calculated as -COOH; molecular weight = 45) of from 4.0 to 80.0% by weight and
c) a content of amide groups (calculated as -CONH-; molecular weight = 43) of from 0.4 to 32.5% by weight,
by reacting
A) a polycarboxylic acid component which is free of anhydride groups with
B) an isocyanate-funetional component having an (average) isocyanate functionality of at least 1.8
while maintaining a ratio of equivalents of carboxyl groups to isocyanate groups of from 1.2 : 1 to 120 : 1.

2. Process according to Claim 1, **characterized in that** saturated aliphatic and/or cycloaliphatic dicarboxylic acids having from 4 to 20 carbon atoms or mixtures thereof are used as polycarboxylic acid component A).

3. Process according to Claim 1, **characterized in that** saturated linear aliphatic dicarboxylic acids having from 5 to 12 carbon atoms or mixtures thereof are used as polycarboxylic acid component A).

4. Process according to Claim 1, **characterized in that** isocyanate-functional components having exclusively aliphatically and/or cycloaliphatically bound isocyanate groups are used as isocyanate-functional component B).

5. Process according to Claim 1, **characterized in that** the monomeric diisocyanates hexamethylen-1,6-diisocyanate, 1-isocyanato-3,3,5-trimethyl-5-isocyanatomethylcyclohexane or 4,4'-diisocyanatodicyclohexylmethane, polyisocyanate or NCO-prepolymers based on these diisocyanates or any mixtures of these components are used as isocyanate-functional component B).

6. Process according to Claim 1, **characterized in that** it is carried out in the melt without solvents.

7. Process according to Claim 1, **characterized in that** it is carried out in solvents or solvent mixtures.

8. Process according to Claim 7, **characterized in that** representatives of the group consisting of ethyl acetate, butyl acetate, ethylene glycol monomethyl or monoethyl ether acetate, 1-methoxypropyl 2-acetate, 2-butanone, 4-methyl-2-pentanone, cyclohexanone, toluene, acetone, propylene glycol diacetate, diethylene glycol dimethyl ether, diethylene glycol ethyl or butyl ether acetate, N-methylpyrrolidone. N-methylcaprolactam, N,N-dimethylformamide, N,N-dimethylacetamidc, methylene chloride are used either alone or in a mixture as solvent.

## Revendications

1. Procédé pour la préparation d'acides polycarboxyliques modifiés avec des polyisocyanates, solides au-dessous de 40 °C et liquides au-dessus de 130 °C, ayant
a) une fonctionnalité carboxy moyenne d'au moins 1,8,
b) une teneur en groupes carboxy libres (calculée en tant que -COOH ; masse moléculaire =45) de 4,0 à 80,0 % en poids et
c) une teneur en groupes amido (calculée en tant que -CONH- ; masse moléculaire = 43) de 0,4 à 32,5 % en poids,
par mise en réaction
A) d'un composant acide polycarboxylique exempt de groupes anhydride avec
B) un composant à fonction isocyanate ayant une fonctionnalité isocyanate (moyenne) d'au moins 1,8
avec obtention d'un rapport d'équivalents des groupes carboxy aux groupes isocyanate de 1,2 : 1 à 120 : 1.

2. Procédé selon la revendication 1, **caractérise en ce qu'**on utilise comme composant acide polycarboxylique A) des acides dicarboxyliques aliphatiques et/ou cycloaliphatiques saturés ayant de 4 à 20 atomes de carbone, ou des mélanges de ceux-ci.

3. Procédé selon la revendication 1, **caractérisé en ce qu'**on utilise comme composant acide polycarboxylique A) des acides dicarboxyliques aliphatiques saturés linéaires ayant de 5 à 12 atomes de carbone, ou des mélanges de ceux-ci.

4. Procédé selon la revendication 1, **caractérisé en ce qu'**on utilise comme composant à fonction isocyanate B) ceux comportant exclusivement des groupes isocyanate en liaison aliphatique et/ou cycloaliphatique.

5. Procédé selon la revendication 1, **caractérisé en ce qu'**on utilise comme composant à fonction isocyanate B) les diisocyanates monomères 1,6-hexaméthylène-diisocyanate, 1-isocyanato-3,3,5-triméthyl-5-isocyanatométhylcyclohexane ou 4,4'-diisocyanatodicyclohexylméthane, des polyisocyanates ou prépolymères-NCO à base de ces diisocyanates ou des mélanges quelconques de ces composants.

6. Procédé selon la revendication 1, **caractérisé en ce qu'**on l'effectue dans la masse fondue, sans solvant.

7. Procédé selon la revendication 1, **caractérisé en ce qu'**on l'effectue dans des solvants ou mélanges de solvants.

8. Procédé selon la revendication 7, **caractérisé en ce qu'**on utilise comme solvant des représentants d'un groupe constitué par l'acétate d'éthyle, l'acétate de butyle, l'acétate d'éther monométhylique ou monoéthylique d'éthylèneglycol, l'acétate de 1-méthoxy-2-propyle, la 2-butanone, la 4-méthyl-2-pentanone, la cyclohexanone, le toluène, l'acétone, le diacétate de propylèneglycol, l'éther diméthylique de diéthylèneglycol, l'acétate d'éther éthylique et butylique de diéthylèneglycol, la N-méthylpyrrolidone, le N-méthylcaprolactame, le N,N-diméthylformamide, le N,N-diméthylacétamide, le chlorure de méthylène, seuls ou sous forme de mélange.
